# EUROPEAN PATENT SPECIFICATION

(11) **EP 3 895 841 B1**
(45) Date of publication and mention of the grant of the patent: **29.05.2024**
(21) Application number: 21168902.1
(22) Date of filing: 16.04.2021
(51) Int. Cl.: B23Q 11/00, B23Q 1/01, B23Q 11/08, B23Q 17/24, B27M 1/08

(54) **MACHINE TO PROCESS COMPONENTS MADE OF WOOD OR THE LIKE**
MASCHINE ZUR VERARBEITUNG VON AUS HOLZWERKSTÜCKEN ODER DERGLEICHEN
MACHINE POUR LE TRAITEMENT DE PIECES EN BOIS OU ANALOGUES

(30) Priority: 16.04.2020 IT 202000008092
(43) Date of publication of application: 20.10.2021
(73) Proprietor: BIESSE S.p.A., 61122 Pesaro (IT)
(72) Inventor: ANDREATINI, Davide, 61121 Pesaro (PU) (IT); SORCELLI, Paolo, 61122 Pesaro (PU) (IT)
(74) Representative: Studio Torta S.p.A.

(56) References cited:
- EP-A1- 3 403 796
- EP-A1- 3 488 984
- DE-A1-102015 226 299
- DE-U1-202015 004 517

## Description

### TECHNICAL FIELD

The present invention relates to a machine to process components made of wood or the like.

### BACKGROUND ART

In the field relating to the processing of components made of wood or the like, it is known to provide a machine comprising a base, which extends in a first direction, is delimited by a front face and by a rear face, which are opposite one another, and is further delimited by two side faces, which are opposite one another; and an overhead crane, which extends above the base in a second direction transverse to the first direction, and is provided with an operating head for processing the components.

The overhead crane is movable along the base in the first direction between two operating stations, each of which is provided with at least one holding device for holding at least one component, and alternatively defining a transfer station for transferring the components into/from the relative holding device and a processing station for processing the components by means of the operating head.

The machine is surrounded by a protection barrier, which extends around the rear face and the side faces of the base, and projects from the front face of the base in the second direction so as to laterally delimit, in the first direction, an access area allowing access to the base.

The machine further comprises a safety system for controlling the operation of the overhead crane and/or of the operating head depending on the behaviour of the personnel in charge.

The safety systems used in the known machines of the type described above are generally of two types.

According to a first type, the safety system comprises a detection device provided with at least one photocell barrier for detecting the presence of the personnel in charge in the access area, and an electric bumper device, which is contact-sensitive and is mounted on the overhead crane.

The safety system further comprises a control unit configured to order the slowing down of the overhead crane in the first direction and/or of the operating head in the second direction when the photocell barrier detects the presence of the personnel in charge in the access area and to order the stopping of the overhead crane in the first direction and/or of the operating head in the second direction when the bumper comes into contact with the personnel in charge.

According to the other type of the two types mentioned above, the safety system comprises a detection device provided with at least two pressure-sensitive safety mats associated with the mentioned operating stations, and a control unit configured to order the stopping of the overhead crane in the first direction and/or of the operating head in the second direction when the safety mats detect the presence of the personnel in charge in the processing station of the operating head.

DE 20 2015 004517 U1 discloses a machine according to the preamble of claim 1.

The known machines for processing components made of wood or the like of the type described above have some drawbacks mainly stemming from the fact that the safety systems are unable to detect the presence of the personnel in charge above the base and the holding devices.

### DISCLOSURE OF INVENTION

The object of the present invention is to provide a machine for processing components made of wood or the like which is devoid of the drawbacks described above and which is simple and cost-effective to embody.

According to the present invention, a machine for processing components made of wood or the like is provided, as claimed in the appended claims.

### BRIEF DESCRIPTION OF THE DRAWINGS

The present invention will now be described with reference to the accompanying drawings, which illustrate a non-limiting embodiment example thereof, wherein:
Figure 1 is a schematic perspective view, with parts removed for the sake of clarity, of a preferred embodiment of the machine of the present invention;
Figures 2 and 3 are two schematic plan views, with parts removed for the sake of clarity, of the machine of Figure 1 illustrated in two different operating positions;
Figure 4 is a schematic perspective view, with parts removed for the sake of clarity, of a variant of the machine of Figure 1; and
Figures 5 and 6 are two schematic plan views, with parts removed for the sake of clarity, of the machine of Figure 4 illustrated in two different operating positions.

### BEST MODE FOR CARRYING OUT THE INVENTION

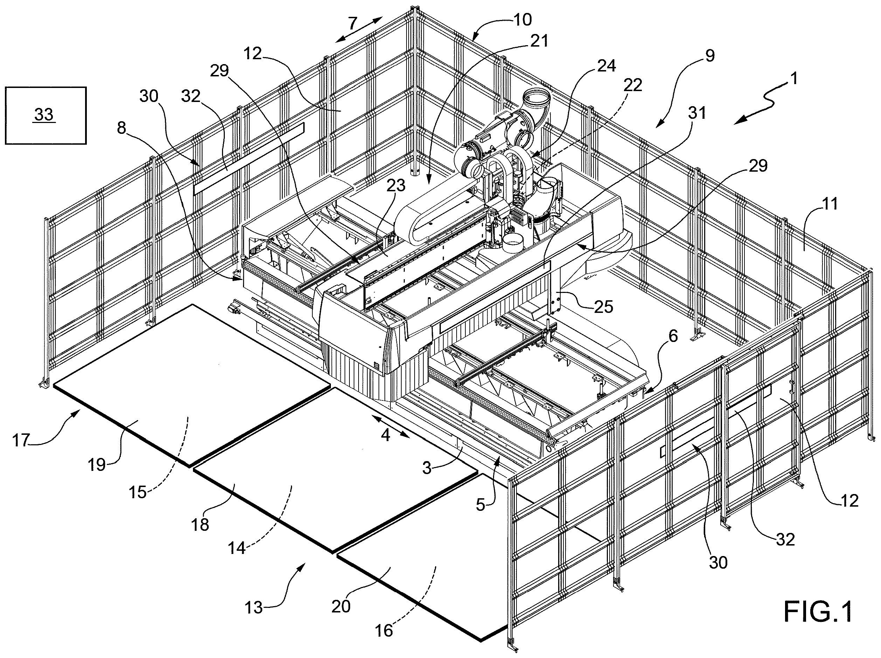

With reference to Figure 1, reference numeral 1 indicates, as a whole, a machine for processing components made of wood or the like defined, in this case, by panels 2 having a substantially flat and rectangular shape.

The machine 1 comprises an elongated base 3, which extends in a horizontal direction 4, is limited by a front face 5 and by a rear face 6, which are substantially parallel to one another and perpendicular to a horizontal direction 7 transverse to the direction 4, and is further delimited by two side faces 8, which are substantially parallel to one another and perpendicular to the faces 5, 6 and to the direction 4.

The access to the machine 1 is controlled by a safety system 9 comprising a protection barrier 10 comprising, in turn, a rear wall 11 extending along the rear face 6 and parallel to the face 6, and two side walls 12 extending along the side faces 8 and parallel to the faces 8.

The two walls 12 project from the base 3 in the direction 7 so as to laterally delimit, in the direction 4, an access area 13 allowing access to the base 3.

The area 13 comprises a central area 14 and two lateral areas 15, 16, which are obtained from opposite bands of the central area 14 in the direction 4, and each extending between the central area 14 and a relative wall 12.

The access of the personnel in charge to the area 13 is controlled by a detection device 17 comprising, in this case, a pressure-sensitive safety mat 18 mounted on the area 14, a pressure-sensitive safety mat 19 mounted on the area 15, and a pressure-sensitive safety mat 20 mounted on the area 16.

The machine 1 further has an overhead crane 21 comprising a vertical upright 22 coupled in a known manner to the base 3 so as to perform, along the base 3 and under the thrust of a known and not illustrated operating device, rectilinear movements in the direction 4.

The upright 22 carries, connected to its free end, a horizontal crossbeam 23, which extends above the base 3 in the direction 7, and supports an operating head 24 of known type, which is coupled in a known manner to the crossbeam 23 so as to perform, along the crossbeam 23, rectilinear movements in the direction 7, and is mounted inside a parallelepipedal fairing 25 mounted around the overhead crane 21 and fixed to the overhead crane 21.

The overhead crane 21 projects into the area 13 in the direction 7, and is movable along the base 3 in the direction 4 between two lateral operating positions, in each of which the overhead crane 21 projects into a relative lateral area 15, 16.

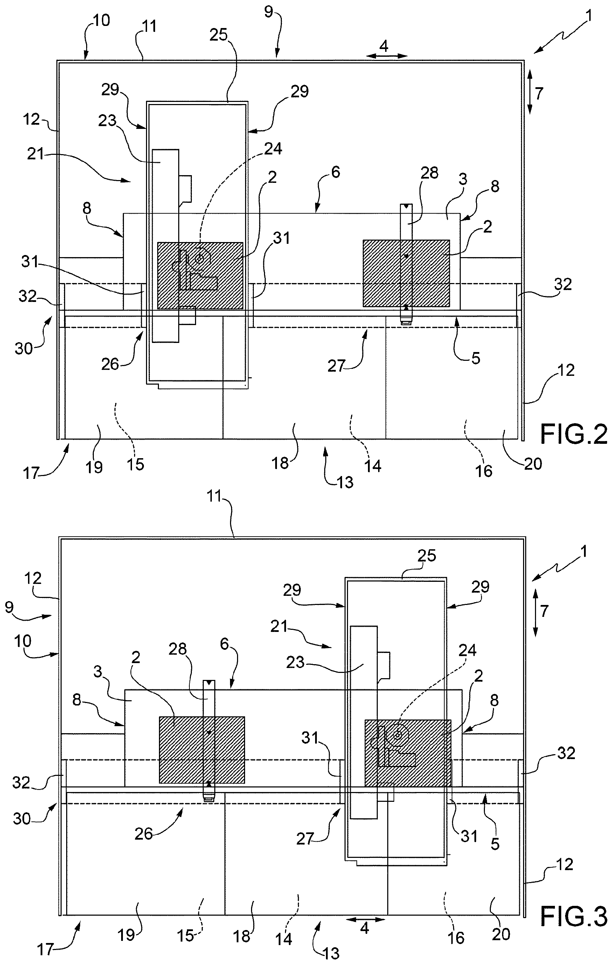

As illustrated in Figures 2 and 3, the machine 1 further has two operating stations 26, 27, which are obtained on the base 3, and comprise respective support planes 28 configured to each hold at least one respective panel 2.

Each station 26, 27 alternatively defines a transfer station for transferring the panels 2 onto/from the relative plane 28 and a processing station for processing the panels 2 by means of the head 24.

In other words, when the overhead crane 21 and the head 24 are arranged in the station 26 (Figure 2), the station 26 defines a processing station for processing the panels 2 and the station 27 defines a loading/unloading station for loading/unloading the panels 2 onto/from the relative support plane 28 while, when the overhead crane 21 and the head 24 are arranged in the station 27 (Figure 3), the station 27 defines a processing station for processing the panels 2 and the station 26 defines a loading/unloading station for loading/unloading the panels 2 onto/from the relative support plane 28.

The access of the personnel in charge above the base 3 between each side wall 12 of the barrier 10 and a corresponding side face 29 of the fairing 25 is controlled by a photocell detection device 30 comprising a transmitter member 31 mounted on the face 29 and a receiver member 32 mounted on the wall 12 in a position facing the member 31.

The machine 1 finally comprises a control unit 33 connected to the detection device 17 and the detection devices 30 and is configured to:
order the stopping of the overhead crane 21 in the direction 4 and/or of the operating head 24 in the direction 7 when the mat 19, 20 associated each time with the processing station or the mat 18 detects the presence of the personnel in charge; and
order the stopping of the overhead crane 21 in the direction 4 and/or of the operating head 24 in the direction 7 when no mat 18, 19, 20 detects the presence of the personnel in charge and one of the photocell detection devices 30 detects the presence of the personnel in charge above the base 3 between the barrier 10 and the overhead crane 21.

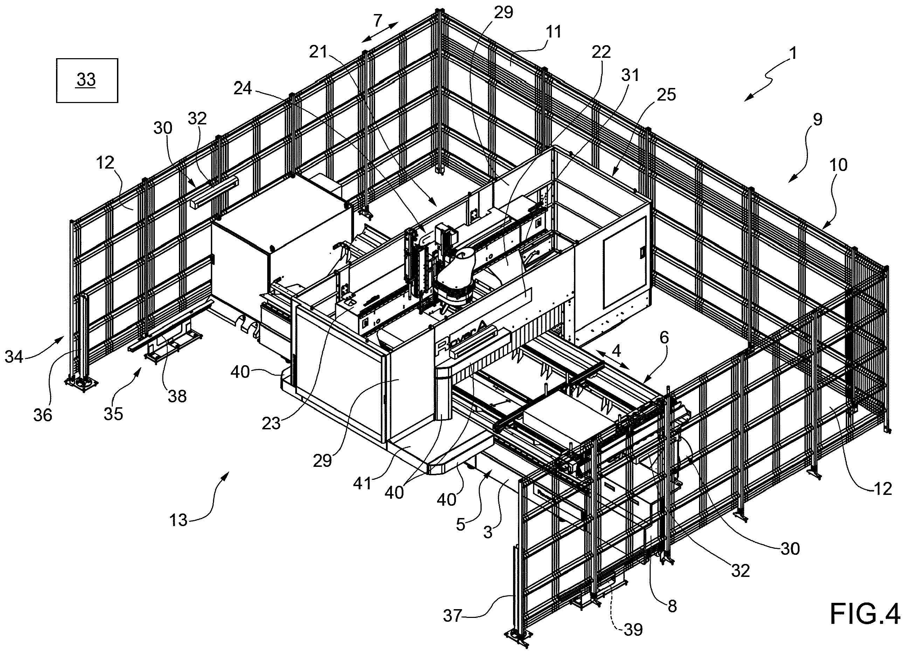

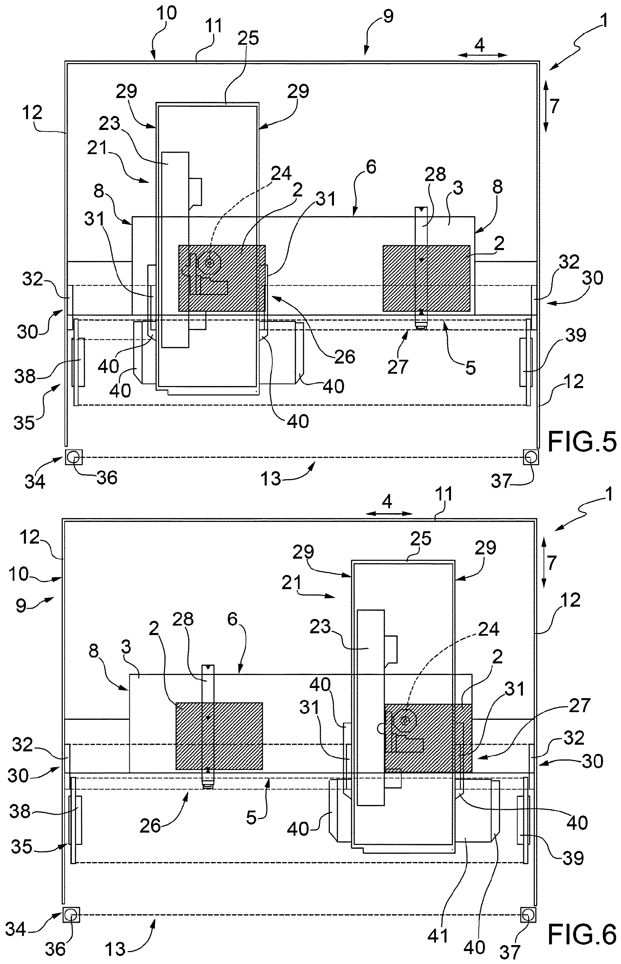

The variant of Figures 4-6 differs from what illustrated in the preceding figures solely in that, in said variant, the detection device 17 is eliminated and replaced with two photocell detection devices 34, 35, whereof the device 34 is mounted at the entry of the protection barrier 10 and the device 35 is mounted between the base 3 and the device 34.

The device 34 comprises a transmitter member 36 and a receiver member 37 mounted on the sides of the entry of the barrier 10, and the device 35 comprises a transmitter member 38 and a receiver member 39 mounted on the sides of the access area 13 on the side walls 12 of the barrier 10.

Moreover, the overhead crane 21 is provided with a contact-sensitive electric safety bumper device 40 mounted on the side faces 29 and on the sides of a bracket 41 obtained from opposite bands of the crossbeam 23 in the direction 4.

The control unit 33 is connected to the detection device 34, the detection device 35, the detection devices 30 and the bumper device 40, and is configured to:
order the stopping of the overhead crane 21 in the direction 4 and/or of the operating head 24 in the direction 7 when the photocell detection device 34 detects the presence of the personnel in charge;
order the deactivation of the photocell detection device 34 following a request from the personnel in charge to enter the access area 13 and the slowing down of the overhead crane 21 in the direction 4 and/or of the operating head 24 in the direction 7;
order the stopping of the overhead crane 21 in the direction 4 and/or of the operating head 24 in the direction 7 when the bumper device 40 comes into contact with the personnel in charge; and
order the stopping of the overhead crane 21 in the direction 4 and/or of the operating head 24 in the direction 7 when the photocell detection device 35 does not detect the presence of the personnel in charge and one of the photocell detection devices 30 detects the presence of the personnel in charge above the base 3 between the barrier 10 and the overhead crane 21.

According to a variant not illustrated, the safety mats 18, 19, 20 and/or the photocell detection devices 30, 34, 35 are eliminated and replaced, each one with a respective infrared radiation detection device or an ultrasound detection device or an optical detection device such as, for example, a video camera.

According to a further variant not illustrated, the devices 34, 35 are mounted on the fairing 25.

## Claims

1. A machine to process components (2) made of wood or the like comprising a base (3), which extends in a first direction (4), is provided with at least one holding device (28) to hold at least one component (2), and has a front face (5) and a rear face (6), which are opposite one another, as well as two side faces (8), which are opposite one another; an overhead crane (21), which extends above the base (3) in a second direction (7) transverse to the first direction (4), is movable along the base (3) in the first direction (4), and is provided with an operating head (24) to process the components (2), which is movable in the second direction (7); a protection barrier (10), which extends around the rear face (6) and the side faces (8) of the base (3), projects from the front face (5) of the base (3) in the second direction (7) so as to laterally delimit, in the first direction (4), an access area (13) allowing access to the base (3), and comprises, in turn, two side walls (12) facing respective side faces (29) of the overhead crane (21) in the first direction (4); and a first detection device (17; 34, 35) to detect the presence of an operator in the access area (13); and **characterized in that** it further comprises, for each side wall (12) of the protection barrier (10), a respective second detection device (30) to detect the presence of the operator above the base (3) between the side wall (12) of the protection barrier (10) and the relative side face (29) of the overhead crane (21); the machine further comprising a control unit (33), which is configured to order the slowing down and/or stopping of the overhead crane (21) in the first direction (4) and/or of the operating head (24) in the second direction (7), when the first detection device (17; 34, 35) detects the absence of the operator in the access area (13) and one of the second detection devices (30) detects the presence of the operator above the base (3) between the protection barrier (10) and the overhead crane (21).

2. A machine according to claim 1, wherein the first detection device (34, 35) is mounted on the sides of the access area (13).

3. A machine according to claim 1, wherein the first detection device (34, 35) comprises a first detection unit (34), which is mounted at the entry of the protection barrier (10), and a second detection unit (35), which is mounted between the base (3) and the first detection unit (34).

4. A machine according to claim 1, wherein the first detection device (34, 35) is mounted on a fairing (25) mounted on the overhead crane (21) around the operating head (24) .

5. A machine according to any one of the claims from 2 to 4, wherein the first detection device (34, 35) comprises at least an optical radiation detection device or an infrared radiation detection device or an ultrasound detection device or an optical device, in particular a video camera.

6. A machine according to claim 1, wherein the first detection device (17) comprises at least two pressure-sensitive safety mats (18, 19, 20).

7. A machine according to any one of the preceding claims, wherein each second detection device (30) comprises an optical radiation detection device or an infrared radiation detection device or an ultrasound detection device or an optical device, in particular a video camera, mounted on the relative side wall (12) of the protection barrier (10) and/or on the relative side face (29) of the overhead crane (21).

8. A machine according to any one of the preceding claims, wherein each second detection device (30) comprises a transmitter (31) and a receiver (32), which are mounted - one - on the relative side wall (12) of the protection barrier (10) and - the other - on the relative side face (29) of the overhead crane (21).

9. A machine according to any one of the preceding claims and further comprising an electric safety bumper device (40), which is contact-sensitive and is mounted on the overhead crane (21).

10. A machine according to any one of the preceding claims and further comprising two operating stations (26, 27), each provided with at least one holding device (28) and alternatively defining a transfer station to transfer the components (2) into/from the holding device (28) and a processing station to process the components (2) by means of the operating head (24); the overhead crane (21) being movable along the base (3) between the two operating stations (26, 27).

## Patentansprüche

1. Maschine zum Bearbeiten von Bauteilen (2) aus Holz oder dergleichen, umfassend eine sich in einer ersten Richtung (4) erstreckenden Basis (3), die mit mindestens einer Haltevorrichtung (28) zum Halten mindestens eines Bauteils (2) versehen ist und eine Vorderseite (5) und eine Rückseite (6), die einander gegenüberliegen, sowie zwei Seitenflächen (8) aufweist, die einander gegenüberliegen; einen Brückenkran (21), der sich oberhalb der Basis (3) in einer zweiten Richtung (7) quer zur ersten Richtung (4) erstreckt, entlang des Basis (3) in der ersten Richtung (4) verfahrbar ist und mit einem Arbeitskopf (24) zur Bearbeitung der Bauteile (2) versehen ist, der in der zweiten Richtung verfahrbar ist, eine Schutzbarriere (10) , die sich um die Rückseite (6) und die Seitenflächen (8) der Basis (3) herum erstreckt, von der Vorderseite (5) der Basis (3) in der zweiten Richtung (7) vorsteht, um in der ersten Richtung (4) einen Zugangsbereich (13), der den Zugang zur Basis (3) ermöglicht, seitlich zu begrenzen, und ihrerseits zwei Seitenwände (12) umfasst, die in der ersten Richtung (4) den jeweiligen Seitenflächen (29) des Brückenkrans (21) zugewandt sind; und eine erste Erfassungsvorrichtung (17; 34, 35) zum Erfassen der Anwesenheit eines Bedieners im Zugangsbereich (13); und **dadurch gekennzeichnet, dass** sie ferner für jede Seitenwand (12) der Schutzbarriere (10) eine jeweilige zweite Erfassungsvorrichtung (30) zum Erfassen der Anwesenheit des Bedieners oberhalb der Basis (3) zwischen der Seitenwand (12) der Schutzbarriere (10) und der jeweiligen Seitenfläche (29) des Brückenkrans (21) umfasst; die Maschine ferner eine Steuereinheit (33) umfasst, die so konfiguriert ist, dass sie die Verlangsamung und/oder das Anhalten des Brückenkrans (21) in der ersten Richtung (4) und/oder des Arbeitskopfes (24) in der zweiten Richtung (7) anordnet, wenn die erste Erfassungsvorrichtung (17; 34, 35) die Abwesenheit der Bedienungsperson im Zugangsbereich (13) erfasst und eine der zweiten Erfassungsvorrichtungen (30) die Anwesenheit der Bedienungsperson oberhalb der Basis (3) zwischen der Schutzbarriere (10) und dem Brückenkran (21) erfasst.

2. Maschine nach Anspruch 1, wobei die erste Erfassungsvorrichtung (34, 35) an den Seiten des Zugangsbereichs (13) angebracht ist

3. Maschine nach Anspruch 1, wobei die erste Erfassungsvorrichtung (34, 35) eine erste Erfassungseinheit (34), die am Eingang der Schutzbarriere (10) angebracht ist, und eine zweite Erfassungseinheit (35) umfasst, die zwischen der Basis (3) und der ersten Erfassungseinheit (34) angebracht ist.

4. Maschine nach Anspruch 1, wobei die erste Erfassungsvorrichtung (34, 35) an einer Verkleidung (25) angebracht ist, die am Brückenkran (21) um den Arbeitskopf (24) herum montiert ist.

5. Maschine nach einem der Ansprüche 2 bis 4, wobei die erste Erfassungsvorrichtung (34, 35) mindestens eine optische Strahlungsdetektionseinrichtung oder eine Infrarotstrahlungsdetektionseinrichtung oder eine Ultraschalldetektionseinrichtung oder eine optische Einrichtung, insbesondere eine Videokamera, umfasst.

6. Maschine nach Anspruch 1, wobei die erste Erfassungsvorrichtung (17) mindestens zwei druckempfindliche Sicherheitsmatten (18, 19, 20) umfasst.

7. Maschine nach einem der vorhergehenden Ansprüche, wobei jede zweite Erfassungsvorrichtungen (30) eine optische Strahlungsdetektionseinrichtung oder eine Infrarot-Strahlungsdetektionseinrichtung oder eine Ultraschalldetektionseinrichtung oder eine optische Einrichtung, insbesondere eine Videokamera, umfasst, die an der jeweiligen Seitenwand (12) der Schutzwand (10) und/oder an der jeweiligen Seitenfläche (29) des Brückenkrans (21) angebracht ist.

8. Maschine nach einem der vorhergehenden Ansprüche, **dadurch gekennzeichnet, dass** jede zweite Erfassungsvorrichtungen (30) einen Sender (31) und einen Empfänger (32) umfasst, von denen einer an der jeweiligen Seitenwand (12) der Schutzwand (10) und der andere an der jeweiligen Seitenfläche (29) des Brückenkrans (21) angebracht ist.

9. Maschine nach einem der vorhergehenden Ansprüche, die ferner eine elektrische Sicherheitsanschlagvorrichtung (40) umfasst, die berührungsempfindlich ist und an dem Brückenkran (21) angebracht ist.

10. Maschine nach einem der vorhergehenden Ansprüche, mit zwei Arbeitsstationen (26, 27), die jeweils mit mindestens einer Haltevorrichtung (28) versehen sind und alternativ eine Übergabestation zur Übergabe der Bauteile (2) in die/aus der Haltevorrichtung (28) und eine Bearbeitungsstation zur Bearbeitung der Bauteile (2) mittels des Arbeitskopfes (24) definieren, wobei der Brückenkran (21) entlang der Basis (3) zwischen den beiden Arbeitsstationen (26, 27) bewegbar ist.

## Revendications

1. Machine pour traiter des composants (2) en bois ou similaires comprenant une base (3), qui s'étend dans une première direction (4), qui est pourvue d'au moins un dispositif de maintien (28) pour maintenir au moins un composant (2), et qui a une face avant (5) et une face arrière (6), qui sont opposées l'une à l'autre, ainsi que deux faces latérales (8), qui sont opposées l'une à l'autre ; un pont roulant (21), qui s'étend au-dessus de la base (3) dans une seconde direction (7) transversale à la première direction (4), est mobile le long de la base (3) dans la première direction (4), et est pourvu d'une tête d'actionnement (24) pour traiter les composants (2), qui est mobile dans la seconde direction (7) ; une barrière de protection (10), qui s'étend autour de la face arrière (6) et des faces latérales (8) de la base (3), fait saillie à partir de la face avant (5) de la base (3) dans la seconde direction (7) de manière à délimiter latéralement, dans la première direction (4), une zone d'accès (13) permettant d'accéder à la base (3), et comprend, à son tour, deux parois latérales (12) faisant face aux faces latérales respectives (29) du pont roulant (21) dans la première direction (4) ; et un premier dispositif de détection (17 ; 34, 35) pour détecter la présence d'un opérateur dans la zone d'accès (13) ; et **caractérisée en ce qu'**elle comprend en outre, pour chaque paroi latérale (12) de la barrière de protection (10), un second dispositif de détection respectif (30) pour détecter la présence de l'opérateur au-dessus de la base (3) entre la paroi latérale (12) de la barrière de protection (10) et la face latérale relative (29) du pont roulant (21) ; la machine comprend en outre une unité de commande (33) configurée pour ordonner le ralentissement et/ou l'arrêt du pont roulant (21) dans la première direction (4) et/ou de la tête d'actionnement (24) dans la seconde direction (7), lorsque le premier dispositif de détection (17 ; 34, 35) détecte l'absence de l'opérateur dans la zone d'accès (13) et que l'un des seconds dispositifs de détection (30) détecte la présence de l'opérateur au-dessus de la base (3) entre la barrière de protection (10) et le pont roulant (21).

2. Machine selon la revendication 1, dans laquelle le premier dispositif de détection (34, 35) est monté sur les côtés de la zone d'accès (13).

3. Machine selon la revendication 1, dans laquelle le premier dispositif de détection (34, 35) comprend une première unité de détection (34), qui est montée à l'entrée de la barrière de protection (10), et une seconde unité de détection (35), qui est montée entre la base (3) et la première unité de détection (34).

4. Machine selon la revendication 1, dans laquelle le premier dispositif de détection (34, 35) est monté sur un carénage (25) monté sur le pont roulant (21) autour de la tête d'actionnement (24).

5. Machine selon l'une quelconque des revendications 2 à 4, dans laquelle le premier dispositif de détection (34, 35) comprend au moins un dispositif de détection de rayonnement optique ou un dispositif de détection de rayonnement infrarouge ou un dispositif de détection d'ultrasons ou un dispositif optique, en particulier une caméra vidéo.

6. Machine selon la revendication 1, dans laquelle le premier dispositif de détection (17) comprend au moins deux tapis de sécurité sensibles à la pression (18, 19, 20)

7. Machine selon l'une quelconque des revendications précédentes, dans laquelle chaque second dispositif de détection (30) comprend un dispositif de détection de rayonnement optique ou un dispositif de détection de rayonnement infrarouge ou un dispositif de détection d'ultrasons ou un dispositif optique, en particulier une caméra vidéo, monté sur la paroi latérale relative (12) de la barrière de protection (10) et/ou sur la face latérale relative (29) du pont roulant (21).

8. Machine selon l'une quelconque des revendications précédentes, dans laquelle chaque second dispositif de détection (30) comprend un émetteur (31) et un récepteur (32), qui sont montés - l'un sur la paroi latérale relative (12) de la barrière de protection (10) et - l'autre - sur la face latérale relative (29) du pont roulant (21).

9. Machine selon l'une quelconque des revendications précédentes, comprenant en outre un dispositif de sécurité électrique (40), sensible au contact et monté sur le pont roulant (21).

10. Machine selon l'une quelconque des revendications précédentes et comprenant en outre deux stations de commande (26, 27), chacune pourvue d'au moins un dispositif de maintien (28) et définissant alternativement une station de transfert pour transférer les composants (2) dans/depuis le dispositif de maintien (28) et une station de traitement pour traiter les composants (2) au moyen de la tête d'actionnement (24) ; le pont roulant (21) étant mobile le long de la base (3) entre les deux stations de commande (26, 27).
